(19) Europäisches Patentamt
European Patent Office
Office européen des brevets

(11) EP 2 799 490 B1

(12) **EUROPEAN PATENT SPECIFICATION**

(45) Date of publication and mention of the grant of the patent:
**18.05.2016 Bulletin 2016/20**

(21) Application number: **12863603.2**

(22) Date of filing: **28.12.2012**

(51) Int Cl.:
***C08L 27/12*** (2006.01) ***C09D 127/12*** (2006.01)
***C08L 37/00*** (2006.01) ***C09D 137/00*** (2006.01)
***C08L 75/04*** (2006.01) ***C09D 175/04*** (2006.01)
***C08G 18/62*** (2006.01) ***C08G 18/71*** (2006.01)
***C08K 5/5415*** (2006.01) ***C08J 7/04*** (2006.01)
***C09D 7/12*** (2006.01) *C08L 63/00* (2006.01)

(86) International application number:
**PCT/JP2012/084163**

(87) International publication number:
**WO 2013/100144 (04.07.2013 Gazette 2013/27)**

(54) **PHOTOCURABLE FLUORINE-CONTAINING COPOLYMER COMPOSITION**

LICHTHÄRTBARE FLUORHALTIGE COPOLYMERZUSAMMENSETZUNG

COMPOSITION DE COPOLYMÈRE CONTENANT DU FLUOR PHOTODURCISSABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 JP 2011287916**

(43) Date of publication of application:
**05.11.2014 Bulletin 2014/45**

(73) Proprietor: **Asahi Glass Company, Limited**
**Tokyo 100-8405 (JP)**

(72) Inventors:
- **SAITO, Shun**
**Tokyo 100-8405 (JP)**
- **NISHIO, Hiroshi**
**Tokyo 100-8405 (JP)**
- **UCHIDA, Kouji**
**Tokyo 100-8405 (JP)**
- **MASUDA, Sho**
**Tokyo 100-8405 (JP)**

(74) Representative: **Müller-Boré & Partner Patentanwälte PartG mbB**
**Friedenheimer Brücke 21**
**80639 München (DE)**

(56) References cited:
**WO-A1-2011/021670**
**WO-A1-2011/087095**
**WO-A1-2012/008498**
**JP-A- H09 208 674**
**JP-A- H10 147 738**
**JP-A- 2000 026 546**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 799 490 B1

## Description

TECHNICAL FIELD

The present invention relates to a photocurable fluorinated copolymer composition to be used for forming a coating film layer on a transparent substrate surface.

BACKGROUND ART

A method for forming a coating film layer by applying a coating material in order to protect the surface of substrates made of various materials such as metals, inorganic materials, plastics, woods, paper, etc. or in order to impart a special function such as water and oil repellency, has been used since a long time ago. As a method for curing a coating film layer, a curing method by heating and a curing method by irradiation with active energy rays have been known.

The latter has merits in that as compared with the former, the time required for curing is short, the occupying area in the coating line may be small, and since no heating is required, the substrate is not restricted. Therefore, it is recently widely used for coating of various substrates as mentioned above, and its application is actively studied in the field of coating of displays, covering of optical fibers or special coating such as covering of e.g. electronic components, electric wires, etc.

Heretofore, for the purpose of the above special coating, a photocurable fluorinated copolymer composition has been proposed which comprises a fluorinated copolymer having polymerizable unsaturated groups, an acrylic acid ester and a photoreaction initiator (Patent Document 1).

The photocurable fluorinated copolymer composition disclosed in Patent Document 1 has such a problem that it is susceptible to an inhibition reaction by oxygen in air, since the photocuring reaction proceeds by a radical polymerization mechanism, or such a drawback that the shrinkage at the time of curing is substantial.

On the other hand, a photocurable fluorinated copolymer compositions comprising a fluorinated copolymer having epoxy groups, an epoxy compound and a photoreaction initiator, has been proposed (Patent Document 2).

This photocurable fluorinated copolymer composition has such a merit that it is not susceptible to an influence of oxygen in air, since the photocuring reaction proceeds by a photocation polymerization mechanism of epoxy groups. Further, it is thereby possible to obtain a cured product excellent in chemical resistance or adhesion to the substrate, and thus, in recent years, it has been used in many applications. However, the photocation polymerization of epoxy groups is poor in the polymerization reactivity or photosensitivity as compared with photoradical polymerization of unsaturated groups, and after the treatment by irradiation with light, heat treatment is further required as post curing. Further, the epoxy compound or the epoxy group-containing monomer as the main material for the epoxy group-containing fluorinated copolymer gives an influence to the working environment and thus presents difficulties in handling.

Further, in recent years, a fluorinated copolymer having oxetanyl groups, has been proposed (Patent Document 3). The fluorinated copolymer having oxetanyl groups disclosed in Patent Document 3 is capable of obtaining a photocurable fluorinated copolymer composition which has a low water absorption rate and is excellent in water repellency and transparency. However, an oxetanyl group-containing unsaturated monomer to be used as a starting material, has plural etheric bonds at the linking site of an oxetanyl group and a vinyl ether group, and therefore, there is a problem such that the coating film layer tends to be poor in the abrasion resistance, while it has a function to make the compatibility excellent with a fluorinated compound such as a water repellent.

Document WO2011/021670 A1 (equivalent to EP 2 468 816 A1) discloses photocurable fluoropolymer compositions containing a fluoropolymer (A) comprising a polymer unit based on fluoro olefin (a-1) and a polymer unit based on unsaturated monomer having oxetanyl group or substituted oxetanyl group (a-2), a photoreaction initiator (B) and an epoxy resin (C).

PRIOR ART DOCUMENTS

PATENT DOCUMENTS

Patent Document 1: JPS 59 46964B B2
Patent Document 2: JPH 05 302058
Patent Document 3: EP 1 095 938 A

## DISCLOSURE OF INVENTION

## TECHNICAL PROBLEM

The present invention is to provide a photocurable fluorinated copolymer composition which is uniform and excellent in transparency, and a coating film layer obtainable by using it, is excellent in heat resistance, weather resistance and abrasion resistance.

## SOLUTION TO PROBLEM

As a result of an extensive study, the present inventors have found that by incorporating to a fluorinated copolymer which contains, in addition to repeating units derived from a fluoroolefin, repeating units derived from an unsaturated monomer having a functional group represented by the following formula (1) to introduce a specific photocurable moiety, a hydrolysable silane compound represented by the following formula (2), an epoxy resin having a cyclohexane ring structure, and a photoreaction initiator, it is possible to obtain a photocurable fluorinated copolymer composition which is uniform and excellent in transparency, and a coaling film layer obtainable by using it, is excellent in heat resistance and abrasion resistance and exhibits a particularly excellent weather resistance performance, and thus have accomplished the present invention.

That is, the present invention provides the following.

<1> A photocurable fluorinated copolymer composition comprising the following fluorinated copolymer (A), hydrolysable silane compound (B) and epoxy resin (C), and a photoreaction initiator (D):

Fluorinated copolymer (A): a fluorinated copolymer containing repeating units (a-1) derived from a fluoroolefin, repeating units (a-2) derived from a monomer represented by the following formula (1), and repeating units (a-3) derived from a monomer having at least one functional group selected from the group consisting of a hydroxy group, a carboxy group and an alkoxysilyl group:

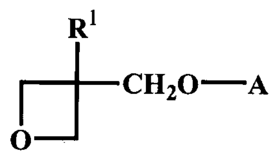

..... ( 1 )

(in the formula (1), $R^1$ is a hydrogen atom or a $C_{1-6}$ alkyl group which may have an etheric oxygen atom, and A is a group selected from a vinyl group, an allyl group, an isopropenyl group and a (meth)acryloyl group),
Hydrolysable silane compound (B): a hydrolysable silane compound represented by the following formula (2):

$$Si(OR^2)_aR^3_{4-a} \qquad (2)$$

(in the formula (2), each of $R^2$ and $R^3$ which are independent of each other, is a $C_{1-10}$ alkyl group, and a is an integer of from 2 to 4),
Epoxy resin (C): an epoxy resin having a cyclohexane ring structure.

<2> The photocurable fluorinated copolymer composition according to the above <1>, wherein the fluorinated copolymer (A) further contains repeating units (a-4) having a $C_{1-10}$ alkyl group and not having any one of a hydroxy group, a carboxy group, an alkoxysilyl group and an oxetanyl group.
<3> The photocurable fluorinated copolymer composition according to the above <1> or <2>, wherein the content of the hydrolysable silane compound (B) in the photocurable fluorinated copolymer composition is from 5 to 40 parts by mass to 100 parts by mass of the fluorinated copolymer (A).
<4> The photocurable fluorinated copolymer composition according to any one of the above <1> to <3>, wherein the content of the epoxy resin (C) in the photocurable fluorinated copolymer composition is from 5 to 40 parts by mass to 100 parts by mass of the fluorinated copolymer (A).
<5> The photocurable fluorinated copolymer composition according to any one of the above <1> to <4>, wherein the content of the photoreaction initiator (D) is from 0.05 to 10 parts by mass to 100 parts by mass in total of the fluorinated copolymer (A) and the epoxy resin (C).
<6> The photocurable fluorinated copolymer composition according to any one of the above <1> to <5>, wherein the content of the units (a-1) in the fluorinated copolymer (A) is from 20 to 80 mol% to the total of all units in the

fluorinated copolymer (A).

<7> The photocurable fluorinated copolymer composition according to any one of the above <1> to <6>, wherein the content of the units (a-2) in the fluorinated copolymer (A) is from 5 to 50 mol% to the total of all units in the fluorinated copolymer (A).

<8> The photocurable fluorinated copolymer composition according to any one of the above <1> to <7>, wherein the content of the units (a-3) in the fluorinated copolymer (A) is from 5 to 50 mol% to the total of all units in the fluorinated copolymer (A).

<9> The photocurable fluorinated copolymer composition according to any one of the above <1> to <8>, wherein the fluorine content in the fluorinated copolymer (A) is from 10 to 35 mass%.

<10> The photocurable fluorinated copolymer composition according to any one of the above <2> to <9>, wherein the content of the units (a-4) in the fluorinated copolymer (A) is from 0.1 to 40 mol% to the total of all units in the fluorinated copolymer (A).

<11> A coated article comprising a transparent substrate and a cured coating layer formed on its surface, wherein the cured coating layer is one formed by curing the photocurable fluorinated copolymer composition as defined in any one of the above <1> to <10>.

<12> The coated article according to the above <11>, wherein the transparent substrate is a transparent substrate selected from the group consisting of a glass substrate, an acrylic resin substrate and a polycarbonate resin substrate.

## ADVANTAGEOUS EFFECTS OF INVENTION

The photocurable fluorinated copolymer composition of the present invention is uniform and excellent in transparency. Further, a coaling film layer obtainable by using it, is excellent in heat resistance and abrasion resistance and exhibits a particularly excellent weather resistance performance.

## DESCRIPTION OF EMBODIMENTS

In this specification, repeating units obtained by polymerization may sometimes be referred to as "units".

Further, in this specification, (meth)acrylic acid means "acrylic acid" or "methacrylic acid", and (meth)acryloyl means "acryloyl" or "methacryloyl".

Now, the photocurable fluorinated copolymer composition of the present invention will be described in detail.

The photocurable fluorinated copolymer composition of the present invention comprises a fluorinated copolymer (A) obtainable by polymerization of specific monomers, a specific hydrolysable silane compound (B), a specific epoxy resin (C), and a photoreaction initiator (D).

Specifically, the respective components (A) to (C) to be contained in the photocurable fluorinated copolymer composition of the present invention are as follows.

Fluorinated copolymer (A): a copolymer containing repeating units (a-1) derived from a fluoroolefin, repeating units (a-2) derived from a monomer represented by the following formula (1), and repeating units (a-3) derived from a monomer having at least one functional group selected from the group consisting of a hydroxy group, a carboxy group and an alkoxysilyl group:

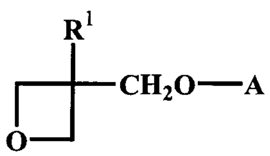

..... (1)

(in the formula (1), $R^1$ is a hydrogen atom or a $C_{1-6}$ alkyl group which may have an etheric oxygen atom, and A is a group selected from the group consisting of a vinyl group, an allyl group, an isopropenyl group and a (meth)acryloyl group),

Hydrolysable silane compound (B): a hydrolysable silane compound represented by the following formula (2):

$$Si(OR^2)_aR^3_{4-a} \qquad (2)$$

(in the formula (2), each of $R^2$ and $R^3$ which are independent of each other, is a $C_{1-10}$ alkyl group, and a is an integer of from 2 to 4),

Epoxy resin (C): an epoxy resin having a cyclohexane ring structure.

Now, the respective components to be contained in the photocurable fluorinated copolymer composition of the present invention will be described.

(1) Fluorinated copolymer (A)

In the photocurable fluorinated copolymer composition of the present invention, the fluorinated copolymer (A) is a copolymer containing repeating units (a-1) derived from a fluoroolefin, repeating units (a-2) derived from a monomer having a specific oxetanyl group, and repeating units (a-3) derived from a monomer having at least one functional group selected from the group consisting of a hydroxy group, a carboxy group and an alkoxysilyl group. Further, the fluorinated copolymer (A) may further contain repeating units (a-4) having a $C_{1-10}$ alkyl group and not having any one of a hydroxy group, a carboxy group, an alkoxysilyl group and an oxetanyl group.

[Units (a-1)]

Units (a-1) are units derived from a fluoroolefin. The fluoroolefin is a monomer (A1) which is a compound having one or more hydrogen atoms of an unsaturated hydrocarbon compound substituted by fluorine atoms, wherein some or all of the rest of hydrogen atoms may be substituted by chlorine atoms. Among hydrogen atoms of the monomer (A1), the number of hydrogen atoms substituted by fluorine atoms (hereinafter referred to as the fluorine-substitution number) is preferably at least 2, more preferably from 3 to 6, further preferably 3 or 4. When the fluorine-substitution number is at least 2, the weather resistance of the coating film layer becomes sufficient.
The fluoroolefin (monomer (A1)) is preferably a $C_{2-3}$ fluoroolefin such as tetrafluoroethylene, chlorotrifluoroethylene, hexafluoropropylene, vinylidene fluoride or vinyl fluoride. From the viewpoint of the weather resistance and the solvent resistance of the coating film layer, tetrafluoroethylene (hereinafter referred to as "TFE") or chlorotrifluoroethylene (hereinafter referred to as "CTFE") is more preferred.
As the monomer (A1), one type may be used alone, or two or more types may be used in combination. Units (a-1) contained in the fluorinated copolymer (A) may be one type only, or two or more types in combination.

[Units (a-2)]

Units (a-2) are units derived from a monomer (A2) represented by the following formula (1) or a monomer having an oxetanyl group or a substituted oxetanyl group.

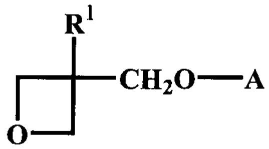

..... (1)

(in the formula (1), $R^1$ is a hydrogen atom or a $C_{1-6}$ alkyl group which may have an etheric oxygen atom, and A is a group selected from the group consisting of a vinyl group, an allyl group, an isopropenyl group and a (meth)acryloyl group).
$R^1$ in the monomer (A2) represented by the formula (1) is preferably a $C_{1-4}$ alkyl group having an etheric oxygen atom, or a $C_{1-4}$ alkyl group, more preferably a $C_{1-4}$ alkyl group.
As the monomer (A2) represented by the formula (1), specifically, 3-ethyl-3-vinyloxymethyloxetane, 3-ethyl-3-(4-vinyloxycyclohexyloxymethyl)oxetane, 3-ethyl-3-allyloxymethyloxetane, 3-methacryloxymethyl-3-ethyloxetane or 3-acryloyloxymethyl-3-ethyloxetane may, for example, be preferred. From the viewpoint of availability and mutual copolymerizability with a fluoroolefin, 3-ethyl-3-vinyloxymethyloxetane is more preferred.
As the monomer (A2), one type may be used alone, or two or more types may be used in combination. Units (a-2) contained in the fluorinated copolymer (A) may be one type only, or two or more types in combination.

[Units (a-3)]

Units (a-3) are units derived from a monomer having a functional group.
The functional group is at least one member selected from the group consisting of a hydroxy group, a carboxy group and an alkoxysilyl group, and a hydroxy group or an alkoxysilyl group is preferred in that it is thereby easy to satisfy excellent durability, weather resistance, abrasion resistance and impact resistance.
Units (a-3) may be units derived from a monomer (A3), which will be formed when a fluorinated copolymer is prepared by using a monomer (A3) having the above functional group (i.e. at least one member selected from the group consisting of a hydroxy group, a carboxy group and an alkoxysilyl group) and a polymerizable reactive group. The polymerizable reactive group may be an ethylenic unsaturated group such as a vinyl group, an allyl group or a meth(acryloyl) group.
The number of carbon atoms in the monomer (A3) is preferably from 2 to 10, more preferably from 3 to 6.

Further, the structure of the monomer (A3) may be straight-chain or branched-chain.

The monomer (A3) may be a monomer having, as the functional group, at least one member selected from the group consisting of a hydroxy group, a carboxy group and an alkoxysilyl group.

The monomer (A3) may, specifically, be the following monomers.

The monomer (A3) having a hydroxy group as the functional group, may, for example, be preferably a hydroxyalkyl vinyl ether such as hydroxyethyl vinyl ether, hydroxybutyl vinyl ether or cyclohexane dimethanol monovinyl ether; an ethylene glycol monovinyl ether such as diethylene glycol nonovinyl ether, triethylene glycol monovinyl ether or tetraethylene glycol monovinyl ether;

a hydroxyalkyl allyl ether such as hydroxyethyl allyl ether, hydroxybutyl ally ether or cyclohexane dimethanol monoallyl ether;

a hydroxyalkyl carboxylic acid vinyl ester such as hydroxyethyl carboxylic acid vinyl ester, hydroxybutyl carboxylic acid vinyl ester or ((hydroxymethylcyclohexyl)methoxy) acetic acid vinyl ester;

a hydroxyalkyl carboxylic acid allyl ester such as hydroxyethyl carboxylic acid allyl ester, hydroxybutyl carboxylic acid allyl ester or ((hydroxymethylcyclohexyl)methoxy) acetic acid allyl ester; or

a (meth)acrylic acid hydroxyalkyl ester such as hydroxyethyl (meth)acrylate.

The monomer (A3) having an alkoxysilyl group as the functional group, may, for example, be preferably 3-(meth)acryloyloxypropyltrimethoxysilane, 3-(meth)acryloyloxypropylmethyldimethoxysilane or trimethoxysilylpropyl vinyl ether.

The monomer (A3) having an alkoxysilyl group as the functional group, may be a monomer obtainable by reacting a compound having a group reactive with a hydroxy group, and an alkoxysilyl group, with the above monomer (A3) having a hydroxy group.

As the "group reactive with a hydroxy group", specifically, an isocyanate group, an epoxy group or an amino group may be mentioned, and an isocyanate group is preferred.

As the compound having a group reactive with a hydroxy group, and an alkoxysilyl group, a compound represented by the following formula (3) (hereinafter referred to as the "compound (3)") may be mentioned.

$$OCN(CH_2)_qSiX_pR^4_{3-p} \qquad (3)$$

(In the formula (3), $R^4$ is a hydrogen atom or a $C_{1-10}$ monovalent hydrocarbon group, X is a $C_{1-5}$ alkoxy group, p is an integer of from 1 to 3, and q is an integer of from 1 to 5.)

Specific examples of the above compound (3) may be 3-isocyanate propyltrimethoxysilane, 3-isocyanate propyltriethoxysilane, etc.

As the above compound (3), one type may be used alone, or two or more types may be used in combination.

By a reaction of the above-mentioned monomer having a hydroxy group with the above compound (3), an urethane bond (-NHC(=O)-) is formed thereby to form a monomer having a group represented by $-NHC(=O)(CH_2)_qSiX_pR^4_{3-p}$.

Here, p is an integer of from 1 to 3, and 3 is preferred, and q is an integer of from 1 to 5, and from 2 to 4 is preferred.

The reaction of the monomer having a hydroxy group with the compound (3), may be carried out by a known method.

The monomer (A3) having a carboxy group as the functional group may, for example, be preferably (meth)acrylic acid, itaconic acid, fumaric acid, maleic acid, maleic anhydride, citraconic acid or undecylenic acid.

Further, the monomer (A3) having a carboxy group as the functional group may be a monomer obtainable by reacting a compound having an acid anhydride group with the above-mentioned monomer having a hydroxy group.

As the monomer (A3), one type may be used alone, or two or more types may be used in combination.

Further, units (a-3) may be units having the above functional group introduced by modifying a group in units in a fluorinated copolymer into the above functional group. For example, in the case of introducing an alkoxysilyl group, such modification is preferably carried out by firstly introducing a reactive group into the fluorinated copolymer and then, reacting to the reactive group, a compound having a group reactive with the reactive group and an alkoxysilyl group. As the reactive group in the fluorinated copolymer, a hydroxy group or a carboxy group is preferred, and a hydroxy group is more preferred. As the group reactive with the reactive group, an epoxy group, an amino group or an isocyanate group is preferred, and an isocyanate group is more preferred. Further, in this case, as the compound having a group reactive with a hydroxy group, and an alkoxysilyl group, the above compound (3) is preferred.

Units (a-3) contained in the fluorinated copolymer (A) may be one type only, or two or more types in combination.

The fluorinated copolymer (A) may contain units other than units (a-1), units (a-2) and units (a-3). Such units other than units (a-1), units (a-2) and units (a-3) are preferably units derived from a monomer copolymerizable with a fluoroolefin, a monomer (A2) represented by the formula (1) and a monomer (A3). Specifically, they are preferably units (a-4) derived from a monomer not having any one of a fluorine atom, an oxetanyl group, a hydroxy group, a carboxy group and an alkoxysilyl group.

[Units (a-4)]

Units (a-4) are preferably units derived from a monomer (A4) which has a $C_{1-10}$ alkyl group and a polymerizable reactive group and which does not have any one of a fluorine atom, an oxetanyl group, a hydroxy group, a carboxy group and an alkoxysilyl group. The polymerizable reactive group in the monomer (A4) is preferably one of an alkenyl group, an alkenyloxy group, a vinyloxycarbonyl group and a (meth)acryloyloxy group.

As the alkenyl group, a vinyl group is preferred.

As the alkenyloxy group, a vinyloxy group, an allyloxy group or an isopropenyloxy group is preferred.

As the monomer (A4), the following may specifically be mentioned.

The monomer (A4) having a vinyloxy group as the polymerizable reactive group, is preferably a vinyl ether, e.g. a chain alkyl vinyl ether having a $C_{1-10}$ alkyl group, such as ethyl vinyl ether, n-propyl vinyl ether, isopropyl vinyl ether, n-butyl vinyl ether, isobutyl vinyl ether, t-butyl vinyl ether, n-hexyl vinyl ether, n-octyl vinyl ether or 2-ethylhexyl vinyl ether; a cycloalkyl vinyl ether having a $C_{1-10}$ cycloalkyl group, such as cyclohexyl vinyl ether, cyclopentyl vinyl ether or cyclooctyl vinyl ether; or an $\alpha$-unsaturated cyclic ether such as 2,3-dihydrofuran, 4-methyl-2,3-dihydrofuran or 3,4-dihydro-2H-pyran.

The monomer (A4) having an allyloxy group, is preferably an ally ether such as methyl allyl ether, ethyl allyl ether, isopropyl allyl ether, n-butyl ally ether or isobutyl allyl ether.

The monomer (A4) having an isopropenyloxy group, is preferably an isopropenyl ether such as methyl isopropenyl ether, ethyl isopropenyl ether, isopropyl isopropenyl ether, n-butyl isopropenyl ether or isobutyl isopropenyl ether.

The monomer (A4) having a vinyloxycarbonyl group, is preferably a vinyl ester such as vinyl acetate, vinyl propionate, vinyl butyrate, vinyl isobutyrate, vinyl capronate, vinyl isocapronate, vinyl pivalate, vinyl caprate, vinyl stearate, vinyl benzoate, vinyl versatate or vinyl laurate.

The monomer (A4) having a (meth)acryloyloxy group, is preferably a (meth)acrylic acid ester such as methyl (meth)acrylate, ethyl (meth)acrylate, propyl (meth)acrylate, isopropyl (meth)acrylate, butyl (meth)acrylate, hexyl (meth)acrylate, octyl (meth)acrylate or allyl (meth)acrylate.

With a view to improving the abrasion resistance or chipping properties of a coating film layer obtainable from the curable fluorinated copolymer composition of the present invention, the number of carbon atoms in the alkyl group in the units (a-4) is preferably from 1 to 10, more preferably from 2 to 10, most preferably from 2 to 8. As a specific alkyl group, an ethyl group, a cyclohexyl group or a 2-ethylhexyl group is preferred.

Among them, the monomer (A4) to form units (a-4) is preferably ethyl vinyl ether, cyclohexyl vinyl ether or 2-ethylhexyl vinyl ether.

As the monomer (A4), one type may be used alone, or two or more types may be used in combination. Units (a-4) contained in the fluorinated copolymer (A) may be one type only, or two or more types in combination.

[Other units]

The fluorinated copolymer (A) may contain units other than the above units (a-1) to (a-4) (hereinafter referred to as "other units").

The monomer to form other units is not particularly limited so long as it is a monomer for other than units (a-1) to (a-4).

The monomer for such other units may, for example, be an olefin such as ethylene, propylene, isobutene, butene or styrene; or an acrylamide such as 1-vinyl imidazole, (meth)acrylamide, N,N-dimethyl (meth)acrylamide, N,N-diethyl (meth)acrylamide, N-hydroxyethyl acrylamide or 1-vinyl-2-pyrrolidone.

When other units are contained in the fluorinated copolymer (A), the proportion of other units to all units in the fluorinated copolymer (A) is preferably from 0.01 to 5 mol%.

Other units contained in the fluorinated copolymer (A) may be one type only, or two or more types in combination.

The fluorinated copolymer (A) is a polymer which comprises units (a-1), units (a-2) and units (a-3), as essential units, and which may optionally contain units (a-4) and/or other units, as the case requires. That is, as the fluorinated copolymer (A), it is possible to use either one or both of a polymer consisting of units (a-1), units (a-2) and units (a-3), and a polymer consisting of units (a-1), units (a-2), units (a-3), and units (a-4) and/or other units.

The content of units (a-1) in the fluorinated copolymer (A) is preferably from 20 to 80 mol%, more preferably from 30 to 70 mol%, particularly preferably from 40 to 60 mol%, to the total of all units in the fluorinated copolymer (A) from the viewpoint of weather resistance.

The content of units (a-2) in the fluorinated copolymer (A) is preferably from 5 to 50 mol%, more preferably from 10 to 45 mol%, particularly preferably from 15 to 40 mol%, to the total of all units in the fluorinated copolymer (A) with a view to improving the heat resistance, humidity resistance, abrasion resistance and impact resistance of the cured coating film layer by increasing the cross link density with an epoxy resin (C).

The content of units (a-3) in the fluorinated copolymer (A) is preferably from 5 to 50 mol%, more preferably

from 10 to 45 mol%, particularly preferably from 15 to 40 mol%, to the total of all units in the fluorinated copolymer (A) with a view to improving the heat resistance, humidity resistance, abrasion resistance and impact resistance of the cured coating film layer by increasing the cross link density with a hydrolysable silane compound (B).

The content of units (a-4) in the fluorinated copolymer (A) is preferably from 0.01 to 40 mol%, more preferably from 0.01 to 30 mol%, to the total of all units in the fluorinated copolymer (A). Units (a-4) are an optional component, and the content of units (a-4) being 0 mol% means that no units (a-4) are contained. In a case where units (a-4) are contained, the lower limit for the content is 0.01 mol%, more preferably at least 0.5 mol%. In a case where the content of units (a-4) is at most 30 mol%, the adhesion to a transparent substrate (such as glass) will be improved without lowering the weather resistance of the cured coating film layer when used for a coated article.

The contents of the respective units in the fluorinated copolymer (A) may be controlled by the charging amounts of the respective monomers and the reaction conditions in the polymerization reaction to obtain the fluorinated copolymer (A).

The fluorine content in the fluorinated copolymer (A) is preferably at least 10 mass%, more preferably at least 20 mass%, further preferably at least 25 mass%. When the fluorine content is large, the weather resistance of a coating film layer obtainable from the curable fluorinated copolymer composition of the present invention becomes good.

On the other hand, the fluorine content in the fluorinated copolymer (A) is preferably at most 35 mass%. When the fluorine content is in this range, it is possible to obtain a photocurable fluorinated copolymer composition which is uniform and excellent in transparency and which has good compatibility with the after-described hydrolysable silane compound (B) represented by the following formula (2) and the epoxy resin (C) having a cyclohexane ring structure.

The fluorinated copolymer (A) preferably has a number average molecular weight (Mn) of from 5,000 to 20,000 as measured by gel permeation chromatography (GPC) using polystyrene as the standard substance. When Mn is at least 5,000, the weather resistance of a coating film layer obtainable from the curable fluorinated copolymer composition of the present invention will be good. If Mn exceeds 20,000, the viscosity tends to be high, and a large amount of a diluting solvent will be required at the time of diluting (or adjusting the viscosity of) the photocurable fluorinated copolymer composition to form a coating material, such being undesirable from the viewpoint of an environmental load.

[Method for production of fluorinated copolymer (A)]

The fluorinated copolymer (A) may be produced by a known method, e.g. by a method disclosed in WO2009/113591, using the above-described monomers.

(2) Hydrolysable silane compound (B)

In the photocurable fluorinated copolymer composition of the present invention, the hydrolysable silane compound (B) is represented by the following formula (2). Some or all of groups represented by -$OR^2$ are reacted with functional groups in the fluorinated copolymer (A), whereby a cured coating film layer excellent in the abrasion resistance will be formed.

$$Si(OR^2)_aR^3_{4-a} \qquad (2)$$

(in the formula (2), each of $R^2$ and $R^3$ which are independent of each other, is a $C_{1-10}$ alkyl group, and a is an integer of from 2 to 4).

If the photocurable fluorinated copolymer composition does not contain the hydrolysable silane compound (B), the curing rate tends to be slow, and the heat resistance and abrasion resistance of the obtainable coating film layer tend to be inadequate.

In the above formula (2), the $C_{1-10}$ alkyl group as $R^2$ is preferably a methyl group or an ethyl group. In a case where plural $R^2$ are present in one molecule, they may be the same or different from one another. If the plural $R^2$ are different from one another, the uniformity of the coating film layer tends to be low due to the difference in their reactivities, and therefore, the plural $R^2$ are preferably the same one another.

The $C_{1-10}$ alkyl group as $R^3$ may have a substituent. That is, some or all of hydrogen atoms in the $C_{1-10}$ alkyl group may be substituted by substituents. Such a substituent is preferably a halogen atom, more preferably a fluorine atom. $R^3$ may preferably be a methyl group, a hexyl group, a decyl group, a phenyl group, a trifluoropropyl group, etc. When plural $R^3$ are present in one molecule, they may be the same or different from one another. From the viewpoint of availability of the raw material, it is preferred that the plural $R^3$ are the same one another.

Specific examples of the hydrolysable silane compound (B) may be a tetrafunctional alkoxysilane such as tetramethoxysilane, tetraethoxysilane or tetraisopropoxysilane; a tri-functional alkoxysilane such as methyltrimethoxysilane, methyltriethoxysilane, phenyltrimethoxysilane, phenyltriethoxysilane, hexyltrimethoxysilane, hexyltriethoxysilane, decyltrimethoxysilane or trifluoropropyltrimethoxysilane; a bi-functional alkoxysilane such as dimethyldimethoxysilane,

diphenyldimethoxysilane, dimethyldiethoxysilane or diphenyldiethoxysilane; etc.

Among them, tetramethoxysilane, tetraethoxysilane, methyltrimethoxysilane, methyltriethoxysilane or phenyltrimethoxysilane is preferred from the viewpoint of the curing rate and the physical properties of the coating film layer.

As the hydrolysable silane compound (B), one type may be used alone, or two or more types may be used in combination.

The content of the hydrolysable silane compound (B) in the photocurable fluorinated copolymer composition of the present invention is preferably from 5 to 40 parts by mass, more preferably from 6 to 35 parts by mass, further preferably from 7 to 30 parts by mass, to 100 parts by mass of the above fluorinated copolymer (A).

The hydrolysable silane compound (B) preferably has a molecular weight of at most 1,000, more preferably has a molecular weight of at most 500, from the viewpoint of its compatibility with the above fluorinated copolymer (A). Since its compatibility with the fluorinated copolymer (A) is good, the photocurable fluorinated copolymer composition of the present invention will be one capable of forming a uniform coating film layer, which will be excellent also in the abrasion resistance.

(3) Epoxy resin (C)

In the photocurable fluorinated copolymer composition of the present invention, the epoxy resin (C) plays such a role that some or all of epoxy groups in the cyclohexane ring structure will react with oxetanyl groups in the fluorinated copolymer (A) to form a cured coating film layer.

As compared with an epoxy resin having a benzene ring structure, the epoxy resin having a cyclohexane ring structure is superior in the weather resistance and also superior in anti-coloration of the coating film layer.

The epoxy resin (C) having a cyclohexane ring structure may, for example, be a nucleus hydrogenated product of bisphenol A-type epoxy resin, a nucleus hydrogenated product of bisphenol F-type epoxy resin, a nucleus hydrogenated product of cresol novolac type epoxy resin, a nucleus hydrogenated product of phenol novolac type epoxy resin, a nucleus hydrogenated product of biphenyl type epoxy resin, a nucleus hydrogenated product of naphthalene structure type epoxy resin, an alicyclic epoxy resin such as 3,4-epoxycyclohexylmethyl-3',4'-epoxycyclohexane carboxylate or vinyl cyclohexene diepoxide, or a polyglycidyl ester of a polybasic acid such as a diglycidyl ester of hexahydro phthalic anhydride.

Among them, a nucleus hydrogenated product of bisphenol A-type epoxy resin or 3,4-epoxycyclohexylmethyl-3',4'-epoxycyclohexane carboxylate is more preferred, since Tg of a cured product will thereby be high, and when used for a coated article, the adhesion to the transparent substrate will thereby be excellent.

As the epoxy resin (C), one type may be used alone, or two or more types may be used in combination.

The content of the epoxy resin (C) in the photocurable fluorinated copolymer composition of the present invention is preferably from 5 to 40 parts by mass, more preferably from 6 to 35 parts by mass, further preferably from 7 to 30 parts by mass, to 100 parts by mass of the fluorinated copolymer (A).

The epoxy resin (C) preferably has a number average molecular weight of at most 1,000, more preferably has a number average molecular weight of at most 500, from the viewpoint of its compatibility with the fluorinated copolymer (A). Since its compatibility with the fluorinated copolymer (A) is good, the photocurable fluorinated copolymer composition of the present invention will be one capable of forming a uniform coating film layer, which will be excellent also in the abrasion resistance.

(4) Photoreaction initiator (D)

The photoreaction initiator (D) is preferably a photoreaction initiator which generates cations by ultraviolet rays thereby to initiate the curing reaction. As such a photoreaction initiator, a known sulfonium salt, iodonium salt, phosphonium salt, diazonium salt, ammonium salt or ferrocene is preferred.

Now, specific examples will be given, but the photoreaction initiator is not limited to such compounds.

The photoreaction initiator of a sulfonium salt type may, for example, be bis[4-(diphenylsulfonio)phenyl]sulfide bishexafluoro phosphate, bis[4-(diphenylsulfonio)phenyl]sulfide bishexafluoro antimonate, bis[4-(diphenylsulfonio)phenyl]sulfide bistetrafluoro borate, bis[4-(diphenylsulfonio)phenyl]sulfide tetrakis(pentafluorophenyl) borate, or diphenyl-4-(phenylthio)phenylsulfonium hexafluoro phosphate.

The photoreaction initiator of an iodonium salt type may, for example, be preferably diphenyl iodonium hexafluorophosphate, diphenyl iodonium hexafluoroantimonate, diphenyl iodonium tetrafluoroborate, diphenyl iodonium tetrakis(pentafluorophenyl)borate, bis(dodecylphenyl)iodonium hexafluorophosphate, or bis(dodecylphenyl)iodonium hexafluoroantimonate.

The photoreaction initiator of a phosphonium salt type may, for example, be preferably ethyltriphenylphosphonium tetrafluoroborate, ethyltriphenylphosphonium hexafluorophosphate, ethyltriphenylphosphonium hexafluoroantimonate, or tetrabutylphosphonium tetrafluoroborate.

The photoreaction initiator of a diazonium salt type may, for example, be preferably phenyl diazonium hexafluorophosphate, phenyl diazonium hexafluoroantimonate, phenyl diazonium tetrafluoroborate, or phenyl diazonium tetrakis(pentafluorophenyl)borate.

The photoreaction initiator of an ammonium salt type may, for example, be preferably 1-benzyl-2-cyanopyridinium hexafluorophosphate, 1-benzyl-2-cyanopyridinium hexafluoroantimonate, 1-benzyl-2-cyanopyridinium tetrafluoroborate, 1-benzyl-2-cyanopyridinium tetrakis(pentafluorophenyl)borate, or 1-(naphthylmethyl)-2-cyanopyridinium hexafluorophosphate.

The photoreaction initiator of a ferrocene type may, for example, be preferably (2,4-cyclopentadien-1-yl)[(1-methylethyl)benzene]-Fe(II) hexafluorophosphate, (2,4-cyclopentadien-1-yl)[(1-methylethyl)benzene]-Fe(II) hexafluoroantimonate, (2,4-cyclopentadien-1-yl)[(1-methylethyl)benzene]-Fe(II) tetrafluoroborate, or (2,4-cyclopentadien-1-yl)[(1-methylethyl)benzene]-Fe(II) tetrakis(pentafluorophenyl)borate.

Commercial products of such photoreaction initiators may, for example, be "SP-150", "SP-152", "SP-170", "SP-172", "CP-66", "CP-77", tradenames, manufactured by ADEKA Co., Ltd.; "CYRACURE-UVI-6990", "CYRACURE-UVI-6974", "CYRACURE-UVI-6992", tradenames, manufactured by Union Carbide Corporation; "CI-2855", "CI-2639", "CI-2758", tradenames, manufactured by Nippon Soda Co., Ltd.; "San-Aid SI-60", "San-Aid SI-80", "San-Aid SI-100", tradenames, manufactured by Sanshin Chemical Industry Co., Ltd., "IRGACURE 261", "IRGACURE 250", tradenames, manufactured by Ciba Specialty Chemicals; "RHODORSIL 2074", tradename, manufactured by Rhodia Japan; "Bis(4-t-butylphenyl)iodonium hexafluorophosphate", tradename, manufactured by Midori Kagaku Co., Ltd.; "CPI-100P", "CPI-101A", "CPI-200K", tradenames, manufactured by San-Apro Ltd.; "ESACURE-1064", "ESACURE-1187", tradenames, manufactured by Lamberti; and "KAYACURE-PCI-220", tradename, manufactured by Nippon Kayaku Co., Ltd.

As the photoreaction initiator, a sulfonium salt or iodonium salt type initiator is preferred from the viewpoint of the curing rate, stability and economical efficiency.

As a commercial product, "IRGACURE 250", tradename, manufactured by Chiba Specialty Chemicals; or "CPI-100P", "CPI-101A" or "CPI-200K", tradename, manufactured by San-Apro Ltd., is preferred.

As the photocurable initiators (D), one type may be used alone, or two or more types may be used in combination.

The content of the photoreaction initiator (D) is not particularly limited, but is preferably from 0.05 to 10 parts by mass, more preferably from 1 to 20 parts by mass, to 100 parts in total of the fluorinated copolymer (A) and the epoxy resin (C) having a cyclohexane ring structure. When the content is at least 0.05 part by mass, the sensitivity of the photoreaction initiator can sufficiently be secured, and with a small light irradiation energy, curing of the photocurable fluorinated copolymer composition can be sufficiently proceeded in a short time. Further, when the content is at most 10 parts by mass, the sensitivity of the photoreaction initiator can be sufficiently secured, and it is possible to avoid using the photoreaction initiator excessively so that the photoreaction initiator will remain as a non-cured component in the composition thereby to deteriorate the physical properties of the cured resin. Further, the amount of the photoreaction initiator to be used may be small, such being economically preferred.

(5) Other components

The photocurable fluorinated copolymer composition of the present invention may contain other components in addition to the above-described components. Such other components will be described in detail as follows.

[Photosensitizer]

It is preferred to incorporate a photosensitizer to the photocurable fluorinated copolymer composition of the present invention for the purpose of photocuring the composition in a short time under low energy irradiation. Further, incorporation of the photosensitizer is effective also in that in a case where a pigment, etc. are incorporated in the photocurable fluorinated copolymer composition of the present invention whereby light is shielded by the pigment and light is not effectively transmitted to the interior of the coating film layer, it is possible to maintain the high curing rate even with a small quantity of light.

As such a photosensitizer, an anthracene compound, a pyrene compound, a carbonyl compound, an organic sulfur compound, a persulfate, a redox type compound, an azo or diazo compound, a halogen compound, a photoreducing pigment, etc. may, for example, be mentioned. Two or more of them may be used in combination as a mixture.

The photosensitizer is usually preferably contained in such an amount that it will be within a range of from 0.005 to 5 parts by mass to 100 parts by mass of the fluorinated copolymer (A).

Specific photosensitizers may, for example, be preferably an anthracene compound; a pyrene compound; a benzoin derivative such as benzoin methyl ether, benzoin isopropyl ether or $\alpha,\alpha$-dimethoxy-$\alpha$-phenylacetophenone; a benzophenone derivative such as benzophenone, 2,4-dichlorobenzophenone, methyl o-benzoyl benzoate, 4,4'-bis(dimethylamino)benzophenone or 4,4'-bis(diethylamino)benzophenone; a thioxanthone derivative such as 2-chlorothioxanthone or 2-isopropylthioxanthone; an anthraquinone derivative such as 2-chloroanthraquinone or 2-methylanthraquinone; an acridone derivative such as N-methylacridone or N-butylacridone; and others, such as $\alpha,\alpha$-diethoxyacetophenone, benzyl, fluorenone, xanthone, an uranyl compound, a halogen compound, etc.

In a case where as a pigment, a titanium oxide pigment is incorporated to the photocurable fluorinated copolymer composition of the present invention, there may be a case where ultraviolet light (at most 380 nm) is absorbed by titanium oxide, whereby the coating film layer is likely to fail in curing. Therefore, in order to avoid such curing failure, it is preferred to use a photosensitizer having a sensitizing ability to light having a wavelength of longer than 380 nm. As such a photosensitizer having a sensitizing ability to light having a wavelength of longer than 380 nm, an anthracene compound is preferred.

Specifically, "ANTHRACURE UVS-1331", "ANTHRACURE UVS-1101", etc., tradenames, manufactured by Kawasaki Kasei Chemicals Ltd. may, for example, be mentioned.

[Organic solvent]

To the photocurable fluorinated copolymer composition of the present invention, an organic solvent may be incorporated. It is thereby possible to lower the viscosity of the composition and to improve the coating performance or working efficiency at the time when the composition is made into a coating material. In a case where no adjustment of the viscosity is required, the photocurable fluorinated copolymer composition of the present invention may be used solventless without adding any organic solvent.

As a specific organic solvent, it is possible to use an organic solvent which is commonly used, for example, a ketone such as acetone, methyl ethyl ketone, methyl propyl ketone, ethyl butyl ketone, diisobutyl ketone, cyclohexanone or isophorone; an ester such as methyl acetate, ethyl acetate, n-propyl acetate, isopropyl acetate, n-butyl acetate, isobutyl acetate or t-butyl acetate; an aromatic hydrocarbon such as toluene, xylene, ethylbenzene, an aromatic petroleum naphtha, tetralin, turpentine oil, Solvesso #100 (registered trademark, Exxon Mobil Corporation), or Solvesso #150 (registered trademark, Exxon Mobil Corporation); an ether such as dioxane, tetrahydrofuran or cyclopentyl methyl ether; an ether ester such as propylene glycol monomethyl ether acetate or methoxybutyl acetate; or an aprotic polar solvent such as dimethyl sulfoxide or N,N-dimethylformamide.

With a view to reducing the environmental load, a solvent which satisfies PRTR Law and HAPs Regulations, i.e. an organic solvent containing no aromatic compound is preferred. Further, an organic solvent classified in the third class organic solvents in the classification of organic solvents by Industrial Safety and Health Act is also preferred.

Specifically, it is preferred to use an ester type solvent or ketone type solvent which satisfies PRTR Law and HAPs Regulations; or a weak solvent such as a paraffin type solvent or naphthene type solvent classified in the third class organic solvents.

The weak solvent such as a paraffin type solvent or naphthene type solvent classified in the third class organic solvents, is preferably at least one member selected from the group consisting of gasoline, coal tar naphtha (including solvent naphtha), petroleum ether, petroleum naphtha, petroleum benzin, turpentine oil and mineral spirit (including mineral thinner, petroleum spirit, white spirit and mineral terpene).

Further, a solvent having an aniline point of from 30°C to 70°C is preferred from the viewpoint of compatibility with the photocurable fluorinated copolymer composition. The lower limit of the aniline point is further preferably 40°C, and the upper limit of the aniline point is further preferably 60°C. Here, the aniline point may be measured in accordance with the aniline point test method disclosed in JIS K2256.

As the weak solvent, a mineral spirit is preferred, since the flash point is at least room temperature. Solvents which are commonly sold as mineral spirits include, for example, HAWS (manufactured by Shell Japan, aniline point: 17°C), ESSO NAPHTHA No. 6 (manufactured by Exxon Mobile Corporation, aniline point: 43°C), LAWS (manufactured by Shell Japan, aniline point: 44°C), PEGASOL 3040 (manufactured by Exxon Mobile Corporation, aniline point: 55°C), A Solvent (manufactured by Nippon Oil Corporation, aniline point: 45°C), CLENZOL (manufactured by Nippon Oil Corporation, aniline point: 64°C), Mineral Spirit A (manufactured by Nippon Oil Corporation, aniline point: 43°C), etc. As the weak solvent, it is possible to use one of them alone or two or more of them as mixed.

In a case where the photocurable fluorinated copolymer composition of the present invention contains a weak solvent as the organic solvent, it is preferred to use such a weak solvent as the polymerization solvent at the time of polymerization for the fluorinated copolymer (A) of the photocurable fluorinated copolymer composition, or to substitute the weak solvent for a part or whole of the solvent or dispersant after the polymerization in another solvent. Further, the obtained composition may be subjected to the concentration adjustment, as the case requires, or other components may be added to the composition, as the case requires.

In a case where in the photocurable fluorinated copolymer composition of the present invention, a solvent different from the polymerization solvent for the fluorinated copolymer (A) is used as the solvent to dissolve the photocurable fluorinated copolymer composition, it is more preferred to substitute the desired organic solvent for a part or whole of the solvent or dispersant after the polymerization of the fluorinated copolymer (A).

The content of the organic solvent in the photocurable fluorinated copolymer composition of the present invention

is suitably determined in consideration of e.g. a proper viscosity at the time of coating, the coating method, etc. When the organic solvent is contained, its content is preferably from 0.01 to 100 parts by mass, more preferably from 3 to 50 parts by mass, to 100 parts by mass of the fluorinated copolymer (A) in the photocurable fluorinated copolymer composition.

The organic solvent contained in the photocurable fluorinated copolymer composition of the present invention may be one type only, or two or more types in combination.

[Reactive diluent]

To the photocurable fluorinated copolymer composition of the present invention, a reactive diluent may be incorporated.

When a solvent is incorporated to the photocurable fluorinated copolymer composition of the present invention to lower the viscosity of the composition, there may be a case where problems, such as foaming, swelling, cracking, etc., occur in the coating film layer obtainable from the curable fluorinated copolymer composition of the present invention.

In such a case, it is preferred to use a reactive diluent in order to lower the viscosity of the composition and to improve the coating performance or working efficiency.

As such a reactive diluent, a compound having at least one cation polymerizable group in one molecule and having a viscosity of at most 100 mPa·s is preferred. The cation polymerizable group in the reactive diluent will react and become a part of the coating film, but will not cross-link to form a coating film.

Specifically, it is preferably a compound having at least one epoxy group or vinyl ether group in one molecule, as the cation polymerizable group, and having a viscosity of at most 100 mP·s.

When the reactive diluent is contained, its content is preferably from 0.01 to 10 parts by mass to 100 parts by mass of the fluorinated copolymer (A) from the viewpoint of the toughness of the coating film.

More specifically, the following may be mentioned. In the brackets, the viscosity is shown. An epoxy compound such as butyl glycidyl ether (1.0 mPa·s), phenyl glycidyl ether (6.0 mPa·s) or neopentyl glycol diglycidyl ether (17.0 mPa·s); or a vinyl ether compound such as cyclohexyl vinyl ether (0.7 mPa·s), triethylene glycol divinyl ether (3.3 mPa·s), hydroxybutyl vinyl ether (5.4 mPa·s) or 2-(2-vinyloxyethoxy)ethyl acrylate (3.7 mPa·s) may preferably be mentioned.

[Antioxidant]

It is also preferred to incorporate an antioxidant to the photocurable fluorinated copolymer composition of the present invention.

With the photocurable fluorinated copolymer composition of the present invention, there may be a case where an oxetane compound, an epoxy compound or a vinyl ether compound in the composition is oxidized in air at room temperature to form a peroxide. The formed peroxide is thermally unstable in many cases, and is likely to be radically decomposed.

Further, by the formed radicals, an onium salt as the catalyst is likely to be decomposed to form an acid thereby to initiate cation polymerization. Accordingly, especially in a case where an iodonium salt is used as a photopolymerization initiator, a problem is likely to occur with respect to the storage stability of the composition.

Therefore, in order to improve the storage stability, it is preferred to incorporate an antioxidant to the photocurable fluorinated copolymer composition. As such an antioxidant, a phenol type antioxidant, a phosphite type antioxidant or a thioether type antioxidant is preferred.

Specifically, a phenol type antioxidant such as 2-t-butyl-p-cresol, 2,6-di-t-butyl-p-cresol, 2,6-di-t-butyl-4-ethylphenol, or 2,2'-methylenebis-(4-methyl-6-t-butylphenol, 2,2'-methylenebis-(4-ethyl-6-t-butylphenol; a phosphite type antioxidant such as triphenyl phosphite or tris(2,4-di-t-butylphenyl) phosphite; or a thioether type antioxidant such as bis(4-hydroxy-3-methylphenyl) sulfide, bis(4-hydroxyphenyl) sulfide, 4,4'-thiobis-(6-t-butyl-m-cresol, 4,4'-thiobis-(6-t-butyl-o-cresol or 2,2'-thiobis-(4-t-octylphenol), may, for example, be preferred.

Among these antioxidants, 2-t-butyl-p-cresol or 2,6-di-t-butyl-p-cresol is more preferred, since it is readily available.

The antioxidant is contained preferably in an amount of from 0.005 to 5.0 parts by mass, more preferably from 0.01 to 3.0 parts by mass, to 100 parts by mass of the fluorinated copolymer (A) in the photocurable fluorinated copolymer composition of the present invention. In a case where a plurality of antioxidants are used in combination for the photocurable fluorinated copolymer composition, it is preferred that the total amount is within the above range.

When the content of the antioxidant is at least 0.005 part by mass, the antioxidant will sufficiently function, and the storage stability of the photocurable fluorinated copolymer composition can be well maintained. Further, even if it is used in excess of 5.0 parts by mass, no substantial distinct difference tends to be observed in the effects to improve the storage stability.

The antioxidant to be incorporated to the photocurable fluorinated resin composition may be one type alone or

two or more types in combination, and it is more preferred to use two or more types in combination. Especially, a substantial synergistic effect can be obtained by using a phenol type antioxidant and a phosphite type antioxidant, or a phenol type antioxidant and a thioether type antioxidant, in combination.

To the photocurable fluorinated copolymer composition of the present invention, an additive such as a rheology controlling agent, an antirust agent, a leveling agent, a defoaming agent, a surfactant, an antifouling agent or a silane coupling agent, or an inorganic component such as a pigment, a dye or a delustering agent may further be incorporated, as the case requires. The content of such components may suitably be selected within a range not to impair the effects of the present invention.

[Rheology controlling agent]

To the photocurable fluorinated copolymer composition of the present invention, a rheology controlling agent may be incorporated, from the viewpoint of the coating operation efficiency.

The rheology controlling agent is a material to adjust the fluidity when formed into a coating material, and is one useful for preparing a coating material suitable for a specific coating condition. By suitably adding it, it is possible to adjust the fluidity of the photocurable fluorinated copolymer composition of the present invention.

The rheology controlling agent may, for example, be preferably a polyolefin type wax such as a castor wax (hardened castor oil or hydrogenated castor oil); a fatty acid amide such as stearic acid amide, hydroxy stearic acid bis amide or m-xylylene bis stearic acid amide; a substituted urea wax such as N-butyl-N'-stearylurea, N-phenyl-N'-stearylurea or N-stearyl-N'-stearylurea; or a high molecular weight compound such as polyethylene glycol or polyethylene oxide.

[Antirust agent]

To the photocurable fluorinated copolymer composition of the present invention, a antirust agent may be incorporated, with a view to protecting a substrate, for example in a case where the substrate is a metal.

The content of the antirust agent is preferably from 0.001 to 0.5 part by mass to 100 parts by mass of the fluorinated copolymer (A).

The antirust agent may, for example, be preferably a triazole compound such as benzotriazole or methyl benzotriazole; an imidazole compound such as imidazole, methyl imidazole or 2,4,5-triphenyl imidazole; or a guanidine compound such as 1,3-diphenyl guanidine.

[Leveling agent]

To the photocurable fluorinated copolymer composition of the present invention, a leveling agent may be incorporated, with a view to improving the surface smoothness of the coating film layer and the coating operation efficiency.

The content of the leveling agent is preferably from 0.001 to 0.5 part by mass to 100 parts by mass of the fluorinated copolymer (A).

The leveling agent may, for example, be "POLYFLOW No. 7", "POLYFLOW No. 50E", "POLYFLOW No. 55", "POLYFLOW No. 75", "POLYFLOW No. 77", "POLYFLOW No. 85", "POLYFLOW No. S" or "POLYFLOW No. 90", tradename, manufactured by Kyoeisha Chemical Co., Ltd., "DISPARLON L-1980-50", "DISPARLON L-1982-50", "DISPARLON L-1983-50", "DISPARLON L-1984-50" or "DISPARLON L-1985-50", tradename, manufactured by Kusumoto Chemicals, Ltd., "SURFYNOL 104", "SURFYNOL 420", "SURFYNOL 440" or "SURFYNOL 465", tradename, manufactured by Air Products Japan, Inc., or "BYK-300", "BYK-306" or "BYK-320", tradename, manufactured by BYK-Chemie.

[Defoaming agent]

To the photocurable fluorinated copolymer composition of the present invention, a defoaming agent may be incorporated, with a view to preventing foaming marks and improving the surface smoothness of the coating film layer and the coating operation efficiency.

The content of the defoaming agent is preferably from 0.001 to 0.5 part by mass to 100 parts by mass of the fluorinated copolymer (A).

The defoaming agent may, for example, be "FLOWLEN AC-300HF", "FLOWLEN AC-326F", "FLOWLEN AC-901 HF", "FLOWLEN AC-903HF" or "FLOWLEN AC-1190HF", tradename, manufactured by Kyoeisha Chemical Co., Ltd., or "DISPARLON LAP-10", "DISPARLON LAP-20" or "DISPARLON LAP-30", tradename, manufactured by Kusumoto Chemicals, Ltd.

[Surfactant]

To the photocurable fluorinated copolymer composition of the present invention, a surfactant may be incorporated, from the viewpoint of the storage stability when the composition is formed into a coating material.
The content of the surfactant is preferably from 0.001 to 0.5 part by mass to 100 parts by mass of the fluorinated copolymer (A).
The surfactant may be nonionic type, cationic type or anionic type. The surfactant useful for the present invention may, for example, be Reox ASE (tradename, manufactured by Daiichi Kogyo K.K.), a fluorine type surfactant "Surflon" (tradename, manufactured by AGC Seimi Chemical Co., Ltd.), an acrylic type "Modaflow" (tradename, manufactured by Monsanto) or "LEOFAT" series (tradename, manufactured by Kao Corporation).

[Antifouling agent]

To the photocurable fluorinated copolymer composition of the present invention, an antifouling agent may be incorporated, with a view to prevention of stains or graffiti on the surface of the coating film layer.
The content of the antifouling agent is preferably from 0.1 to 5.0 part by mass to 100 parts by mass of the fluorinated copolymer (A).
The antifouling agent is preferably a resin having an organosiloxane chain in its main chain or side chain, and specifically, it may, for example, be a hydroxy group-containing silicone resin, a methoxy group-containing silicone resin, an epoxy-modified silicone resin, a phenol-modified silicone resin, an acryl-modified silicone resin, a polyester-modified silicone resin, an alkyd-modified silicone resin or a silicone-modified acrylic resin.
The antifouling agent preferably has a hydroxy value of from 50 to 150 mgKOH/g, whereby the hydroxyl groups will react, and the antifouling property can be maintained for a long period of time. Within such a range, the coating film will be free from becoming turbid.
Specifically, it may, for example, be BYK-Silclean 3700 (manufactured by BYK-Chemie Japan, solid content; 25%, hydroxy value: 120 mgKOH/g), X-22-160AS (manufactured by Shin-Etsu Chemical Co., Ltd., hydroxy value: 120 mgKOH/g), KF-6001 (manufactured by Shin-Etsu Chemical Co., Ltd., hydroxy value: 62 mgKOH/g) or XF42-B0970 (manufactured by Momentive Performance Materials Inc., hydroxy value: 60 mgKOH/g).
The antifouling agent to be incorporated to the photocurable fluorinated copolymer composition may be one type only or two or more types in combination.

[Silane coupling agent]

To the photocurable fluorinated copolymer composition of the present invention, a silane coupling agent may be incorporated, from the viewpoint of the adhesion to the substrate.
The content of the antifouling agent is preferably from 0.1 to 10.0 parts by mass to 100 parts by mass of the fluorinated copolymer (A).
The silane coupling agent may, for example, be preferably 3-mercaptopropyltrimethoxysilane, 3-isocyanate propyltriethoxysilane, bis(triethoxysilylpropyl)tetrasulfide, 3-mercaptopropylmethyldimethoxysilane, 3-chloropropyltrimethoxysilane, 3-ureidepropyltriethoxysilane, 3-aminopropyltriethoxysilane, 3-aminopropyltrimethoxysilane, 3-acryloyloxypropyltrimethoxysilane, 3-methacryloxypropyltriethoxysilane, 3-methacryloxypropylmethyldiethoxysilane, 3-methacryloxypropyltrimethoxysilane, 3-methacryloxypropylmethyldimethoxysilane, p-styryltrimethoxysilane, 3-glycidoxypropyltriethoxysilane, 3-glycidoxypropyltrimethoxysilane, 2-(3,4-epoxycyclohexyl)ethyltrimethoxysilane, vinyltriethoxysilane, vinyltrimethoxysilane or vinyltrichlorosilane.

[Pigment, dye]

To the photocurable fluorinated copolymer composition of the present invention, a pigment or a dye may be incorporated to color the coating film layer, to prevent rusting of the primer layer or to shield ultraviolet rays.
The pigment may, for example, be preferably an inorganic pigment such as carbon black or titanium oxide, or an organic pigment such as phthalocyanine blue, phthalocyanine green, quinacridone red, indanthrene orange or isoindolinone yellow. Titanium oxide may, for example, be "A-190", tradename, manufactured by Sakai Chemical Industry Co., Ltd.

[Delustering agent]

To the photocurable fluorinated copolymer composition of the present invention, a delustering agent may be incorporated to lower the gloss of the coating film layer.

The delustering agent is preferably e.g. ultrafine powder synthetic silica. When a delustering agent is used, it is possible to form an elegant semi-gloss or delustered coating film layer.

The photocurable fluorinated copolymer composition of the present invention may be produced by mixing the fluorinated copolymer (A), the hydrolysable silane compound (B), the epoxy resin having a cyclohexane ring structure, the photoreaction initiator (D) and various additives which are added as the case requires. The order of mixing or the order of addition is not particularly limited.

The photocurable fluorinated copolymer composition of the present invention is formed into a coating material, if necessary by adding the above-mentioned various additives, and then used for coating. As a method for forming it into a coating material, the various components may be uniformly mixed by e.g. a dispersing device. In a case where a pigment is to be dispersed, it may be uniformly dispersed by means of a pigment-dispersing apparatus. A mixing method using a rocking mill, an attritor, a motor mill, a ring mill or the like, may also be mentioned.

After forming the photocurable fluorinated copolymer composition of the present invention into a coating material, as a method for coating by using such a coating material, an optional method may be employed such as spray coating, brush coating, a dipping method, a roll coater method or a flow coater method.

At the time of curing the photocurable fluorinated copolymer composition of the present invention or a coating film layer of a coating material containing such a composition, it is preferred to employ irradiation with active energy rays such as ultraviolet rays.

As the ultraviolet ray irradiation source, it is preferred to utilize a mercury lamp, a xenon lamp, a carbon arc, a metal halide lamp, sunlight, etc.

The conditions for irradiation with ultraviolet rays are not particularly limited, but it is preferred to apply a light beam including ultraviolet rays within a range of from 150 to 450 nm in air or in an inert gas atmosphere for at least a few seconds. Especially in a case where irradiation is carried out in air, it is preferred to use a high pressure mercury lamp.

An apparatus to be used for the curing is not particularly limited, and it is possible to employ a curing apparatus such as a closed type curing furnace or a tunnel furnace whereby continuous curing is possible. Specifically, an inverter type conveyer "ECS-401 GX" manufactured by Eye Graphics Co., Ltd. or an ultraviolet ray irradiation apparatus "UVC-02516S1AA01" manufactured by Ushio Inc. may be mentioned.

To the photocurable fluorinated copolymer composition of the present invention, a thermal curing catalyst may preliminarily be added, so that after curing by irradiation with light, the curing is accelerated by heating.

An apparatus to be used for curing is not particularly limited, and it is possible to employ a curing apparatus such as a closed type curing furnace or a tunnel furnace whereby continuous curing is possible. The heating source is not particularly limited, and heating can be carried out by a method such as hot air circulation, infrared ray heating or high frequency heating. The temperature and time required for the curing may vary depending upon the type of the thermal curing catalyst, etc. But usually, curing conditions at a temperature within a range of from 50 to 150°C for from 1 to 10 hours, are preferred, and curing conditions at a temperature within a range of from 50 to 80°C for from 30 minutes to 2 hours are more preferred.

According to the present invention, it is possible to provide a coated article by forming a cured coating film layer on a transparent substrate by using the photocurable fluorinated copolymer composition of the present invention or a coating material containing such a composition. The transparent substrate may be a substrate selected from the group consisting of a glass substrate, an acrylic resin substrate and a polycarbonate resin substrate.

Further, it is also preferred to coat other substrates, i.e. not only the above transparent substrates, by means of the photocurable fluorinated copolymer composition of the present invention. The material is not particularly limited, and it may, for example, be an inorganic material such as concrete, a natural stone, glass, etc.; a metal such as iron, stainless steel, aluminum, copper, brass, titanium, etc.; or an organic material such as a plastic, rubber, adhesive, wood, etc. Further, FRP, resin-reinforced concrete, fiber-reinforced concrete, etc. may also be mentioned as organic/inorganic composite materials.

Articles to be coated may, for example, be transport equipments such as automobiles, electric cars, aircrafts, etc.; construction materials such as bridge components, iron towers, etc.; industrial materials such as water-proofing sheets, tanks, pipes, etc.; building materials such building exterior materials, doors, window materials, monuments, poles, etc.; road materials such as road dividers, guardrails, sound insulating walls, etc.; communication equipments; electrical and electronic components; solar cell back sheets, solar cell surface-protecting coating materials, etc.

EXAMPLES

Now, the present invention will be described in detail with reference to these Examples.

Further, in the following Examples, the fluorinated copolymer (A) will be referred to as component A, the hydrolysable silane compound (B) will be referred to as component B, the epoxy resin (C) having a cyclohexane ring structure will be referred to as component C and the photoreaction initiator (D) will be referred to as component D.

<Production of photocurable fluorinated copolymer composition and its evaluation>

(PRODUCTION EXAMPLE 1: Production of fluorinated copolymer (A-1))

Into a stainless steel autoclave having an internal capacity of 300 ml and equipped with a stirrer, 3-ethyl-3-vinyloxymethyloxetane (22.4 g) to form the units (a-2), hydroxybutyl vinyl ether (9.1g) to form the units (a-3), cyclohexyl vinyl ether (19.8 g) to form the units (a-4), xylene (95.0 g), ethanol (17.7 g) and potassium carbonate (1.0 g) were introduced all at once, and dissolved oxygen was removed by nitrogen.

Then, chlorotrifluoroethylene (45.8 g) to form the units (a-1) was introduced into the autoclave, the temperature was gradually raised, and when it reached 55°C, a xylene solution (0.6 g) containing 50% of t-butyl peroxypivalate was introduced into the autoclave over a period of two hours, followed by further stirring for 15 hours, whereupon the reaction was terminated. After the reaction, potassium carbonate was removed by filtration, and ethanol and a part of xylene were distilled off by evaporation so that a non-volatile component of the fluorinated copolymer (A-1) would be 60%.

The infrared absorption spectrum of the obtained solution was measured, whereby an absorption peak of an oxetanyl group was observed, and thus, formation of the fluorinated copolymer (A-1) was confirmed.

From $H^1$-NMR, the composition of the obtained fluorinated copolymer (A-1) was found to be units (a-1) of chlorotrifluoroethylene/units (a-2) of 3-ethyl-3-vinyloxymethyloxetane/units (a-3) of hydroxybutyl vinyl ether/units (a-4) of hyclohexyl vinyl ether = 50/20/10/20 mol%.

(PRODUCTION EXAMPLE 2: Production of fluorinated copolymer (A-2))

Into a stainless steel autoclave having an internal capacity of 300 ml and equipped with a stirrer, 3-ethyl-3-vinyloxymethyloxetane (33.6 g) to form the units (a-2), hydroxybutyl vinyl ether (9.1 g) to form the units (a-3), cyclohexyl vinyl ether (9.9 g) to form the units (a-4), xylene (95.0 g), ethanol (17.7 g) and potassium carbonate (1.0 g) were introduced all at once, and dissolved oxygen was removed by nitrogen.

Then, chlorotrifluoroethylene (45.8 g) to form the units (a-1) was introduced into the autoclave, the temperature was gradually raised, and after it reached 55°C, a xylene solution (0.6 g) containing 50% of t-butyl peroxypivalate was introduced into the autoclave over a period of two hours, followed by further stirring for 15 hours, whereupon the reaction was terminated. After the reaction, potassium carbonate was removed by filtration, and ethanol and a part of xylene were distilled off by evaporation so that a non-volatile component of the fluorinated copolymer (A-2) would be 60%.

The infrared absorption spectrum of the obtained solution was measured, whereby an absorption peak of an oxetanyl group was observed, and thus formation of the fluorinated copolymer (A-2) was confirmed.

From $H^1$-NMR, the composition of the obtained fluorinated copolymer (A-2) was found to be units (a-1) of chlorotrifluoroethylene/units (a-2) of 3-ethyl-3-vinyloxymethyloxetane/units (a-3) of hydroxybutyl vinyl ether/units (a-4) of cyclohexyl vinyl ether =50/30/10/10 mol%.

(PRODUCTION EXAMPLE 3: Production of fluorinated copolymer (A-3))

The fluorinated copolymer (A-2) (200.0 g) obtained in Production Example 2 was transferred to a four-necked flask having a capacity of 500 ml and equipped with a thermometer, a reflux condenser and a stirrer, and 3-isocyanate propyltriethoxysilane (27.6 g), xylene (33.5 g) and tin 2-ethylhexanoate (0.04 g) were added, followed by a reaction at 50°C for 5 hours in a nitrogen atmosphere.

The infrared absorption spectrum of the obtained solution was measured, whereby no absorption peak was observed in the absorption band of an isocyanate group, and instead, a large absorption peak was observed in the absorption band of an urethane bond. Thus, formation of the fluorinated copolymer (A-3) having alkoxysilyl groups was confirmed.

After the reaction, trimethyl orthoformate (8.6 g) and isopropanol (8.6 g) were added, and adjustment was made so that a non-volatile component of the fluorinated copolymer (A-3) would be 60%.

From $H^1$-NMR, the composition of the obtained fluorinated copolymer (A-3) was found to be units (a-1) of chlorotrifluoroethylene/units (a-2) of 3-ethyl-3-vinyloxymethyloxetane/units (a-3) of the monomer having alkoxysilyl groups/units (a-4) of cyclohexyl vinyl ether =50/30/10/10 mol%.

(EXAMPLES 1 to 5 and COMPARATIVE EXAMPLE 1)

Using raw materials shown in Table 1 in blend proportions (unit: parts by mass) shown in Table 1, photocurable fluorinated copolymer compositions were prepared and used as clear coating material compositions in Examples 1 to 5 and Comparative Example 1.

Each of the obtained photocurable fluorinated copolymer compositions was used as a clear coating material

composition and applied to a chromate-treated surface of an aluminum plate so that the film thickness would be 50 μm.

After ageing at room temperature for one day, ultraviolet rays (UV) were applied under the following conditions by means of a conveyer type ultraviolet ray irradiation apparatus to obtain a coating film layer-attached test plate.

[UV CURING CONDITIONS]

UV irradiation apparatus: Inverter type conveyer manufactured by Eye Graphics Co., Ltd., tradename: "ECS-401 GX"
Lamp: a metal halide lamp and a high pressure mercury lamp are used in combination.
Irradiation condition: 1 kW
Conveyer speed: 162 cm/min
Number of irradiation: once

With respect to the coating film layer-attached test plate thus obtained, "gel fraction of coating film layer", "hardness of coating film layer", "abrasion resistance of coating film layer", "heat resistance of coating film layer" and "weather resistance of coating film layer" were evaluated by the following test methods. The results are shown in Table 1.

The materials used in the following Table 1 and their abbreviations are as follows.

"CELLOXIDE 2021P": 3,4-Epoxycyclohexenylmethyl-3',4'-epoxycyclohexene carboxylate, manufactured by Daicel Chemical Industries, Ltd., number average molecular weight: 252, epoxy resin (component C).
"YX-8000": Aromatic nucleus-hydrogenated product of bisphenol A type epoxy resin, manufactured by Mitsubishi Chemical Corporation, number average molecular weight: 400, epoxy resin (component C).
"Irgacure 250": Photoreaction initiator (component D), manufactured by Ciba Specialty Chemicals.
"AP-8": Mixture of mono-2-ethylhexyl phosphate and di-2-ethylhexyl phosphate, manufactured by Daihachi Chemical Industry Co., Ltd., curing catalyst.
"DBTDL": Dibutyl tin dilaurate diluted 1,000 times with xylene, curing catalyst.
"BYK-306": Leveling agent, manufactured by BYK-Chemie.
"KBM-303": 2-(3,4-Epoxycyclohexyl)ethyltrimethoxysilane, manufactured by Shin-Etsu Chemical Co., Ltd., silane coupling agent.

Further, the molecular weight of phenyl trimethoxysilane used as component B was 198.3, and the molecular weight of tetramethoxysilane was 152.2.

[Test methods]

1. Gel fraction of coating film layer

A coating film layer having a thickness of 50 μm obtained in each of Examples 1 to 5 and Comparative Example 1 was immersed in acetone and extracted for two hours under a refluxing condition.

The initial mass before extraction and the mass after extraction and drying, were measured, and the gel fraction was calculated by the following formula.

$$\text{Gel fraction (\%)}=(\text{mass after extraction and drying})/(\text{initial mass before extraction})\times 100$$

2. Hardness of coating film layer

The hardness of the coating film layer was measured by a method in accordance with JIS K 5600-5-4 (2009).

3. Abrasion resistance of coating film layer

The abrasion resistance of the coating film layer was measured by a method in accordance with JIS K 5600-5-9 (2009). That is, each of two wear rings was combined with a weight of 500 g and rotated 100 times, whereby the haze was measured by a haze meter, and the change in the haze between before and after the abrasion test was measured. From the change at that time, evaluation was made by the following standards.

"○": The change in the haze being less than 10%.
"Δ": The change in the haze being at least 10% and less than 30%.
"×": The change in the haze being at least 30%.

4. Heat resistance of coating film layer (glass transition temperature (Tg) of coating film layer)

By means of a viscoelasticity spectrometer (product name: EXSTAR DMS6100, manufactured by SII Nanotechnology Inc.), Tg (°C) of the coating film layer was measured under conditions of a frequency of 1 Hz, a temperature raising rate of 10°C /min. and a nitrogen flow rate of 50 ml/min. Here, a temperature at which tanδ became maximum was taken as Tg of the coating film layer.

5. Weather resistance of coating film layer

By means of an accelerated weathering tester (Model: QUV/SE, manufactured by Q-PANEL LAB PRODUCTS), the gloss retention of the coating film layer was evaluated by comparing the gloss as between at the initial and after exposure for 10,000 hours.
The gloss of the coating film layer surface was measured by means of PG-1 M (gloss meter, manufactured by Nippon Denshoku Industries Co., Ltd.), and the weather resistance was evaluated in accordance with the following standards.

"○": Gloss retention being at least 60%.
"Δ": Gloss retention being at least 40% and less than 60%.
"×": Gloss retention being less than 20%.

[Table 1]

| | | | Ex. | | | | | Comp. Ex. |
|---|---|---|---|---|---|---|---|---|
| | | | 1 | 2 | 3 | 4 | 5 | 1 |
| Blend composition (parts by mass) | Component A | Fluorinated copolymer (A-1 ) | 67.3 | - | - | - | - | 67.3 |
| | | Fluorinated copolymer (A-2) | - | 67.3 | 67.3 | 59.3 | - | - |
| | | Fluorinated copolymer (A-3) | - | - | - | - | 67.3 | - |
| | Component B | Phenyl trimethoxysilane | 4.0 (5.9) | 4.0 (5.9) | - | 12.0 (20.2) | 4.0 (5.9) | - |
| | | Tetramethoxysilane | - | - | 4.0 (5.9) | - | - | - |
| | Component C | CELLOXIDE 2021P | 4.0 (5.9) | 4.0 (5.9) | - | 4.0 (6.7) | 4.0 (5.9) | 8.0 (11.9) |
| | | YX-8000 | - | - | 4.0 (5.9) | - | - | - |
| | Component D | Irgacure250 | 0.4 (0.59) | 0.4 (0.59) | 0.4 (0.59) | 0.4 (0.63) | 0.4 (0.59) | 0.4 (0.53) |
| | Other components | AP-8 | 0.1 | 0.1 | 0.1 | 0.1 | 0.1 | 0.1 |
| | | DBTDL | 0.1 | 0.1 | 0.1 | 0.1 | 0.1 | 0.1 |
| | | KBM-303 | 4.0 | 4.0 | 4.0 | 4.0 | 4.0 | 4.0 |
| | | BYK-306 | 0.1 | 0.1 | 0.1 | 0.1 | 0.1 | 0.1 |
| | | Butyl acetate | 20.0 | 20.0 | 20.0 | 20.0 | 20.0 | 20.0 |

(continued)

| | | Ex. | | | | | Comp. Ex. |
|---|---|---|---|---|---|---|---|
| | | 1 | 2 | 3 | 4 | 5 | 1 |
| | Total | 100.0 | 100.0 | 100.0 | 100.0 | 100.0 | 100.0 |
| Evaluation results | Gel fraction (%) | 96.5 | 97.3 | 95.2 | 94.9 | 98.2 | 97.3 |
| | Hardness of coating film layer | H | 2H | 2H | 2H | 2H | HB |
| | Abrasion resistance of coating film layer | ○ | ○ | ○ | ○ | ○ | × |
| | Heat resistance of coating film layer (Tg) (°C) | 78.0 | 89.2 | 88.6 | 98.3 | 95.2 | 65.3 |
| | Weather resistance of coating film layer | ○ | ○ | ○ | ○ | ○ | × |

In the above Table, the numerical values in the brackets for components B and C represent blend ratios to 100 parts by mass of component A, and the numerical values in the brackets for component D represent blend ratios to 100 parts by mass in total of components A and C.

(COMPARATIVE EXAMPLES 2 and 3)

Photocurable fluorinated copolymers of Comparative Examples 2 and 3 were prepared in the same manner as in Example 1, except that the following respective epoxy resins were used instead of CELLOXIDE 2021 P as component C in the photocurable fluorinated copolymer in Example 1. Using them as clear coating material compositions, preparation of coating film layer-attached test plates was attempted in the same manner as in Example 1.

· Comparative Example 2: "JER828EL", manufactured by Mitsubishi Chemical Corporation, bisphenol A type epoxy resin, number average molecular weight: 260, (epoxy resin not belonging to component C in the present invention).
· Comparative Example 3: "JER1002", manufactured by Mitsubishi Chemical Corporation, bisphenol A type epoxy resin, number average molecular weight: 1,200, (epoxy resin not belonging to component C in the present invention).

However, in each of Comparative Examples 2 and 3, the coating material underwent agglomeration, and its coating was impossible.

<Coating on transparent substrate and its evaluation>

(EXAMPLE 6)

On one side of a glass substrate (thickness: 4 mm) used as a transparent substrate, a room temperature curable fluorinated coating material (white) (tradename: Bonfron #2000 (white), manufactured by AGC Coat-tech Co., Ltd.) was applied by spray coating so that the thickness of a dried coating film layer would be 40 μm and aged at room temperature for one week.
Then, on the side on which the fluorinated coating material was not applied, the photocurable fluorinated copolymer composition obtained in Example 2 was applied so that the thickness would be 10 μm, and by means of a conveyor type ultraviolet ray irradiation apparatus, ultraviolet (UV) rays were applied under the same conditions as the curing conditions in Examples 1 to 5 to prepare a cured coating film layer-attached test plate (I).
With respect to the obtained coating film layer-attached test plate (I), an accelerated weathering test and an actual exposure test were carried out.

(EXAMPLE 7)

On one side of a polycarbonate resin substrate (thickness: 4 mm) used as a transparent substrate, a room temperature curable fluorinated coating material (white) (tradename: Bonfron #2000 (white), manufactured by AGC Coat-tech Co., Ltd.) was applied by spray coating so that the thickness of a dried coating film layer would be 40 μm and

aged at room temperature for one week.

Thereafter, the substrate was left to stand still in a drying oven at 110°C for 24 hours to remove the moisture in the polycarbonate resin substrate.

Then, on the side on which the fluorinated coating material was not applied, corona treatment was applied and further, on the same side, the photocurable fluorinated copolymer composition obtained in Example 2 was applied so that the thickness would be 10 μm, and by means of a conveyor type ultraviolet ray irradiation apparatus, ultraviolet (UV) rays were applied under the same conditions as the curing conditions in Examples 1 to 5 to prepare a cured coating film layer-attached test plate (II).

With respect to the obtained coating film layer-attached test plate (II), an accelerated weathering test and an actual exposure test were carried out.

(EXAMPLE 8)

On one side of an acrylic resin substrate (thickness: 4 mm) used as a transparent substrate, a room temperature curable fluorinated coating material (white) (tradename: Bonfron #2000 (white), manufactured by AGC Coat-tech Co., Ltd.) was applied by spray coating so that the thickness of a dried coating film layer would be 40 μm and aged at room temperature for one week.

Then, on the side on which the fluorinated coating material was not applied, corona treatment was applied and further, on the same side, the photocurable fluorinated copolymer composition obtained in Example 2 was applied so that the thickness would be 10 μm, and by means of a conveyor type ultraviolet ray irradiation apparatus, ultraviolet (UV) rays were applied under the same conditions as the curing conditions in Examples 1 to 5 to prepare a cured coating film layer-attached test plate (III).

With respect to the obtained coating film layer-attached test plate (III), an accelerated weathering test and an actual exposure test were carried out.

(COMPARATIVE EXAMPLE 4)

On one side of a polycarbonate resin substrate (thickness: 4 mm) used as a transparent substrate, a room temperature curable fluorinated coating material (white) (tradename: Bonfron #2000 (white), manufactured by AGC Coat-tech Co., Ltd.) was applied by spray coating so that the thickness of a dried coating film layer would be 40 μm and aged at room temperature for one week to prepare a coating film layer-attached test plate (IV).

With respect to the obtained coating film layer-attached test plate (IV), an accelerated weathering test and an actual exposure test were carried out.

[Evaluation method]

In the following evaluations, "○" represents "excellent", "Δ" represents "good", and "x" represents "no good".

(Accelerated weathering test)

1. Gloss retention of coating film layer

The gloss of the coating film layer surface was measured by means of PG-1 M (gloss meter, manufactured by Nippon Denshoku Industries Co., Ltd.), and the weather resistance was evaluated in accordance with the following standards.

"○": Gloss retention being at least 80%.
"Δ": Gloss retention being at least 60% and less than 80%.
"x": Gloss retention being less than 60%.

2. Yellowing of transparent substrate

The weather resistance was evaluated in accordance with the following standards.

"○": No yellowing of the transparent substrate observed.
"x": Yellowing of the transparent substrate observed.

(Actual exposure test)

1. Gloss retention of coating film layer

The gloss of the coating film layer surface was measured by means of PG-1 M (gloss meter, manufactured by Nippon Denshoku Industries Co., Ltd.), and the weather resistance was evaluated in accordance with the following standards.

"○": Gloss retention being at least 80%.
"Δ": Gloss retention being at least 60% and less than 80%.
"×": Gloss retention being less than 60%.

2. Yellowing of transparent substrate

The weather resistance was evaluated in accordance with the following standards.

"○": No yellowing of the transparent substrate observed.
"×": Yellowing of the transparent substrate observed.

[Table 2]

| | Ex. 6 | Ex. 7 | Ex. 8 | Comp. Ex. 4 |
|---|---|---|---|---|
| Accelerated weathering test | | | | |
| 1. Gloss retention of coating film layer | ○ | ○ | ○ | × |
| 2. Presence or absence of yellowing of substrate | ○ | ○ | ○ | × |
| Actual exposure test | | | | |
| 1. Gloss retention of coating film layer | ○ | ○ | ○ | × |
| 2. Presence or absence of yellowing of substrate | ○ | ○ | ○ | × |

As shown in Table 1, in Examples 1 to 5, it is possible to provide a photocurable fluorinated copolymer composition which is excellent in heat resistance and abrasion resistance and which exhibits a particularly excellent weather resistance performance. On the other hand, in Comparative Example 1 in Table 1, the curing rate was slow, whereby the heat resistance and abrasion resistance of the coating film layer were inadequate, and the weather resistance performance was also hardly said to be excellent.

Further, in Comparative Examples 2 and 3 wherein component C in the present invention was not incorporated, coating was impossible since the coating material underwent agglomeration. This is considered to be attributable to that the compatibility of the fluorinated copolymer (A) with the epoxy resin having no cyclohexane ring was extremely poor.

Further, as shown in Table 2, it has been confirmed that the photocurable fluorinated copolymer composition of the present invention is excellent in the effect for protecting a transparent substrate and particularly excellent in the effect for protecting a plastic substrate.

INDUSTRIAL APPLICABILITY

The photocurable fluorinated copolymer of the present invention is uniform and excellent in transparency, and a coating film layer obtainable by using it, is excellent in heat resistance and abrasion resistance and exhibits a particularly excellent weather resistance performance, and thus, it is useful in various coating fields.

**Claims**

**1.** A photocurable fluorinated copolymer composition comprising the following fluorinated copolymer (A), hydrolysable silane compound (B) and epoxy resin (C), and a photoreaction initiator (D):

Fluorinated copolymer (A): a copolymer containing repeating units (a-1) derived from a fluoroolefin, repeating

units (a-2) derived from a monomer represented by the following formula (1), and repeating units (a-3) derived from a monomer having at least one functional group selected from the group consisting of a hydroxy group, a carboxy group and an alkoxysilyl group:

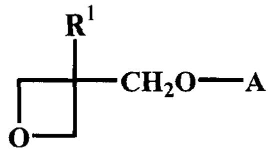

..... (1)

(in the formula (1), $R^1$ is a hydrogen atom or a $C_{1-6}$ alkyl group which may have an etheric oxygen atom, and A is a group selected from a vinyl group, an allyl group, an isopropenyl group and a (meth)acryloyl group),
Hydrolysable silane compound (B): a hydrolysable silane compound represented by the following formula (2):

$$Si(OR^2)_aR^3_{4-a} \quad (2)$$

in the formula (2), each of $R^2$ and $R^3$ which are independent of each other, is a $C_{1-10}$ alkyl group, and a is an integer of from 2 to 4,
Epoxy resin (C): an epoxy resin having a cyclohexane ring structure.

**2.** The photocurable fluorinated copolymer composition according to Claim 1, wherein the fluorinated copolymer (A) further contains repeating units (a-4) having a $C_{1-10}$ alkyl group and not having any one of a hydroxy group, a carboxy group, an alkoxysilyl group and an oxetanyl group.

**3.** The photocurable fluorinated copolymer composition according to Claim 1 or 2, wherein the content of the hydrolysable silane compound (B) in the photocurable fluorinated copolymer composition is from 5 to 40 parts by mass to 100 parts by mass of the fluorinated copolymer (A).

**4.** The photocurable fluorinated copolymer composition according to any one of Claims 1 to 3, wherein the content of the epoxy resin (C) in the photocurable fluorinated copolymer composition is from 5 to 40 parts by mass to 100 parts by mass of the fluorinated copolymer (A).

**5.** The photocurable fluorinated copolymer composition according to any one of Claims 1 to 4, wherein the content of the photoreaction initiator (D) is from 0.05 to 10 parts by mass to 100 parts by mass in total of the fluorinated copolymer (A) and the epoxy resin (C).

**6.** The photocurable fluorinated copolymer composition according to any one of Claims 1 to 5, wherein the content of the units (a-1) in the fluorinated copolymer (A) is from 20 to 80 mol% to the total of all units in the fluorinated copolymer (A).

**7.** The photocurable fluorinated copolymer composition according to any one of Claims 1 to 6, wherein the content of the units (a-2) in the fluorinated copolymer (A) is from 5 to 50 mol% to the total of all units in the fluorinated copolymer (A).

**8.** The photocurable fluorinated copolymer composition according to any one of Claims 1 to 7, wherein the content of the units (a-3) in the fluorinated copolymer (A) is from 5 to 50 mol% to the total of all units in the fluorinated copolymer (A).

**9.** The photocurable fluorinated copolymer composition according to any one of Claims 1 to 8, wherein the fluorine content in the fluorinated copolymer (A) is from 10 to 35 mass%.

**10.** The photocurable fluorinated copolymer composition according to any one of Claims 2 to 9, wherein the content of the units (a-4) in the fluorinated copolymer (A) is from 0.1 to 40 mol% to the total of all units in the fluorinated copolymer (A).

**11.** A coated article comprising a transparent substrate and a cured coating layer formed on its surface, wherein the cured coating layer is one formed by curing the photocurable fluorinated copolymer composition as defined in any one of Claims 1 to 10.

12. The coated article according to Claim 11, wherein the transparent substrate is a transparent substrate selected from the group consisting of a glass substrate, an acrylic resin substrate and a polycarbonate resin substrate.

## Patentansprüche

1. Photohärtbare fluorierte Copolymerzusammensetzung, umfassend das folgende fluorierte Copolymer (A), eine hydrolysierbare Silanverbindung (B) und ein Epoxyharz (C), und ein Photoreaktionsinitiator (D):

   Fluoriertes Copolymer (A): ein Copolymer, enthaltend wiederkehrende Einheiten (a-1), abgeleitet von einem Fluorolefin, wiederkehrende Einheiten (a-2), ab-geleitet von einem Monomer, dargestellt durch die folgende Formel (1), und
   wiederkehrende Einheiten (a-3), abgeleitet von einem Monomer mit mindestens einer funktionalen Gruppe, ausgewählt aus der Gruppe, bestehend aus einer Hydroxygruppe, einer Carboxygruppe und einer Alkoxysilylgruppe:

   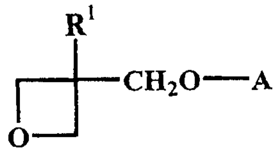

   ..... (1)

   (in der Formel (1) ist $R^1$ ein Wasserstoffatom oder eine $C_{1-6}$ Alkylgruppe, welche ein Ether-Sauerstoffatom aufweisen kann, und A ist eine Gruppe, ausgewählt aus einer Vinylgruppe, einer Allylgruppe, einer Isopropenylgruppe und einer (Meth)acryloylgruppe),
   hydrolysierbare Silanverbindung (B): eine hydrolysierbare Silanverbindung, dargestellt durch die folgende Formel (2):

   $$Si(OR^2)_aR^3_{4-a} \qquad (2)$$

   wobei in der Formel (2) $R^2$ und $R^3$, welche unabhängig voneinander sind, jeweils eine $C_{1}$-$_{10}$ Alkylgruppe sind und a eine ganze Zahl von 2 bis 4 ist,
   Epoxyharz (C): ein Epoxyharz mit einer Cyclohexanringstruktur.

2. Photohärtbare fluorierte Copolymerzusammensetzung gemäß Anspruch 1, wobei das fluorierte Copolymer (A) weiter wiederkehrende Einheiten (a-4) mit einer $C_{1}$-$_{10}$ Alkylgruppe enthält und keine von einer Hydroxygruppe, einer Carboxygruppe, einer Alkoxysilylgruppe und einer Oxetanylgruppe aufweist.

3. Photohärtbare fluorierte Copolymerzusammensetzung gemäß Anspruch 1 oder 2, wobei der Anteil der hydrolysierbaren Silanverbindung (B) in der photohärtbaren fluorierten Copolymerzusammensetzung von 5 bis 40 Masseteilen bis 100 Masseteilen des fluorierten Copolymers (A) beträgt.

4. Photohärtbare fluorierte Copolymerzusammensetzung gemäß einem der Ansprüche 1 bis 3, wobei der Anteil des Epoxyharzes (C) in der photohärtbaren fluorierten Copolymerzusammensetzung von 5 bis 40 Masseteilen bis 100 Masseteilen des fluorierten Copolymers (A) beträgt.

5. Photohärtbare fluorierte Copolymerzusammensetzung gemäß einem der Ansprüche 1 bis 4, wobei der Anteil des Photoreaktionsinitiators (D) von 0,05 bis 10 Masseteilen bis 100 Masseteilen, bezogen auf die Gesamtheit des fluorierten Copolymers (A) und des Epoxyharzes (C), beträgt.

6. Photohärtbare fluorierte Copolymerzusammensetzung gemäß einem der Ansprüche 1 bis 5, wobei der Anteil der Einheiten (a-1) in dem fluorierten Copolymer (A) von 20 bis 80 Mol-%, bezogen auf die Gesamtheit sämtlicher Einheiten in dem fluorierten Copolymer (A), beträgt.

7. Photohärtbare fluorierte Copolymerzusammensetzung gemäß einem der Ansprüche 1 bis 6, wobei der Anteil der Einheiten (a-2) in dem fluorierten Copolymer (A) von 5 bis 50 Mol-% bezogen auf die Gesamtheit sämtlicher Einheiten in dem fluorierten Copolymer (A) beträgt.

8. Photohärtbare fluorierte Copolymerzusammensetzung gemäß einem der Ansprüche 1 bis 7, wobei der Anteil der Einheiten (a-3) in dem fluorierten Copolymer (A) von 5 bis 50 Mol-%, bezogen auf die Gesamtheit sämtlicher Einheiten in dem fluorierten Copolymer (A), beträgt.

9. Photohärtbare fluorierte Copolymerzusammensetzung gemäß einem der Ansprüche 1 bis 8, wobei der Fluoranteil in dem fluorierten Copolymer (A) von 10 bis 35 Masse-% beträgt.

10. Photohärtbare fluorierte Copolymerzusammensetzung gemäß einem der Ansprüche 2 bis 9, wobei der Anteil der Einheiten (a-4) in dem fluorierten Copolymer (A) von 0,1 bis 40 Mol-%, bezogen auf die Gesamtheit sämtlicher Einheiten in dem fluorierten Copolymer (A), beträgt.

11. Beschichteter Gegenstand, umfassend ein transparentes Substrat und eine gehärtete Beschichtungsschicht, gebildet auf dessen Oberfläche, wobei die gehärtete Beschichtungsschicht eine ist, gebildet durch Härten der photohärtbaren fluorierten Copolymerzusammensetzung, wie in einem der Ansprüche 1 bis 10 definiert.

12. Beschichteter Gegenstand gemäß Anspruch 11, wobei das transparente Substrat ein transparentes Substrat, ausgewählt aus der Gruppe, bestehend aus einem Glassubstrat, einem Acrylharzsubstrat und einem Polycarbonatharzsubstrat, ist.

**Revendications**

1. Composition de copolymère fluoré photodurcissable comprenant le copolymère fluoré (A), le composé silane hydrolysable (B) et la résine époxy (C) qui suivent, ainsi qu'un amorceur de photoréaction (D) :

copolymère fluoré (A) : un copolymère contenant des motifs répétitifs (a-1) dérivés d'une oléfine fluorée, des motifs répétitifs (a-2) dérivés d'un monomère représenté par la formule (1) suivante, et des motifs répétitifs (a-3) dérivés d'un monomère possédant au moins un groupe fonctionnel choisi dans l'ensemble constitué par un groupe hydroxy, un groupe carboxy et un groupe alcoxysilyle :

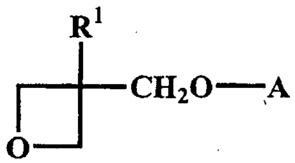

..... (1)

(dans la formule (1), $R^1$ est un atome d'hydrogène ou un groupe alkyle en $C_1$ à $C_6$ qui peut porter un atome d'oxygène d'éther, et A est un groupe choisi parmi un groupe vinyle, un groupe allyle, un groupe isopropényle et un groupe (méth)acryloyle),
composé silane hydrolysable (B) : un composé silane hydrolysable représenté par la formule (2) suivante :

$$Si(OR^2)_aR^3_{4-a} \quad (2)$$

(dans la formule (2), chacun de $R^2$ et $R^3$, qui sont indépendants l'un de l'autre, est un groupe alkyle en $C_1$ à $C_{10}$, et a est un entier de 2 à 4,
résine époxy (C) : une résine époxy présentant une structure cyclique de cyclohexane.

2. Composition de copolymère fluoré photodurcissable selon la revendication 1, dans laquelle le copolymère fluoré (A) contient en outre des motifs répétitifs (a-4) possédant un groupe alkyle en $C_1$ à $C_{10}$ et ne possédant aucun parmi un groupe hydroxy, un groupe carboxy, un groupe alcoxysilyle et un groupe oxétanyle.

3. Composition de copolymère fluoré photodurcissable selon la revendication 1 ou 2, dans laquelle la teneur en composé silane hydrolysable (B) dans la composition de copolymère fluoré photodurcissable est de 5 à 40 parties en masse pour 100 parties en masse du copolymère fluoré (A).

4. Composition de copolymère fluoré photodurcissable selon l'une quelconque des revendications 1 à 3, dans laquelle la teneur en la résine époxy (C) dans la composition de copolymère fluoré photodurcissable est de 5 à 40 parties

en masse pour 100 parties en masse du copolymère fluoré (A).

**5.** Composition de copolymère fluoré photodurcissable selon l'une quelconque des revendications 1 à 4, dans laquelle la teneur en l'amorceur de photoréaction (D) est de 0,05 à 10 parties en masse pour 100 parties en masse au total du copolymère fluoré (A) et de la résine époxy (C).

**6.** Composition de copolymère fluoré photodurcissable selon l'une quelconque des revendications 1 à 5, dans laquelle la teneur en les motifs (a-1) dans le copolymère fluoré (A) est de 20 à 80 % en moles du total de tous les motifs dans le copolymère fluoré (A).

**7.** Composition de copolymère fluoré photodurcissable selon l'une quelconque des revendications 1 à 6, dans laquelle la teneur en les motifs (a-2) dans le copolymère fluoré (A) est de 5 à 50 % en moles du total de tous les motifs dans le copolymère fluoré (A).

**8.** Composition de copolymère fluoré photodurcissable selon l'une quelconque des revendications 1 à 7, dans laquelle la teneur en les motifs (a-3) dans le copolymère fluoré (A) est de 5 à 50 % en moles du total de tous les motifs dans le copolymère fluoré (A).

**9.** Composition de copolymère fluoré photodurcissable selon l'une quelconque des revendications 1 à 8, dans laquelle la teneur en fluor dans le copolymère fluoré (A) est de 10 à 35 % en masse.

**10.** Composition de copolymère fluoré photodurcissable selon l'une quelconque des revendications 2 à 9, dans laquelle la teneur en les motifs (a-4) dans le copolymère fluoré (A) est de 0,1 à 40 % en moles du total de tous les motifs dans le copolymère fluoré (A).

**11.** Article revêtu comprenant un substrat transparent et une couche de revêtement durcie formée sur sa surface, dans lequel la couche de revêtement durcie est formée par durcissement de la composition de copolymère fluoré photodurcissable telle que définie dans l'une quelconque des revendications 1 à 10.

**12.** Article revêtu selon la revendication 11, dans lequel le substrat transparent est un substrat transparent choisi dans l'ensemble constitué par un substrat en verre, un substrat en résine acrylique et un substrat en résine de polycarbonate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011021670 A1
- EP 2468816 A1
- JP S5946964B B
- JP H05302058 B
- EP 1095938 A
- WO 2009113591 A